# EUROPEAN PATENT APPLICATION

(11) **EP 3 919 162 A1**
(43) Date of publication of application: **08.12.2021**
(21) Application number: 20747983.3
(22) Date of filing: 27.01.2020
(51) Int. Cl.: B01D 61/04, B01D 61/12, B01D 65/08, C02F 1/44

(54) **CHEMICAL INFUSION CONTROL METHOD**

(30) Priority: 28.01.2019 JP 2019012435
(71) Applicant: Kurita Water Industries Ltd., Tokyo 164-0001 (JP)
(72) Inventor: OHTSUKA, Yuta, Tokyo 164-0001 (JP); HAYAKAWA, Kunihiro, Tokyo 164-0001 (JP)
(74) Representative: Becker, Eberhard
(86) International application number: PCT/JP2020/002698
(87) International publication number: WO 2020/158645

(57) **Abstract**

Multiple chemical infusion levels of differing chemical infusion volumes are set. When control is initiated, chemical infusion is started at the level with the highest chemical infusion volume. Each time a sampling period S passes, the rate of increase in the pressure difference of an RO apparatus 5 is compared with a threshold value A. When the rate of increase is at or below the threshold value A, the chemical infusion volume is reduced to the level that is one step lower. When the rate of increase is greater than the threshold value A, the chemical infusion volume is increased to the level that is one step higher.

## Description

### [Technical Field]

The present invention relates to a chemical dosing control method for controlling an amount of injection of a slime control agent into a water system, and preferably to a chemical dosing control method for reducing slime in a reverse osmosis membrane (RO membrane) system and preventing fouling of the reverse osmosis membrane.

### [Background Art]

In seawater desalination plants and waste-water recovery plants, RO membrane systems that can efficiently remove electrolytes and middle- and low-molecular-weight organic components are widely used. In a water treatment apparatus including an RO membrane system, generally, pretreatment apparatuses such as a pressure filtration apparatus, a gravity filtration apparatus, a coagulation sedimentation treatment apparatus, a pressurized flotation filtration apparatus, an immersion membrane apparatus, and a membrane type pretreatment apparatus are provided as parts before the RO membrane system, and water to be treated is pretreated by these pretreatment apparatuses, and then supplied to the RO membrane system and subjected to an RO membrane separation treatment.

In such a water treatment apparatus, microorganisms contained in water to be treated proliferate in apparatus pipes and on the membrane surface to form slime, which causes problems such as odor emission due to proliferation of microorganisms in the system and decrease in the amount of water permeating through the RO membrane. In order to prevent contamination by microorganisms, a method in which an antimicrobial agent is constantly or intermittently added to water to be treated, which is treated while sterilizing the water to be treated or the inside of the apparatus, is generally used.

In particular, in order to address problems of the RO membrane, a method in which, in addition to a composite chlorine-based oxidizing agent such as chloramine and sodium chlorosulfamate, a slime control agent including a composite bromine-based oxidizing agent and a compound that prevents proliferation of microorganisms such as an isothiazolone-based compound is added and proliferation of microorganisms is prevented is used.

Regarding a method of controlling the amount of a slime control agent added, Patent Literature 1 describes that a differential pressure on a non-permeable side of an RO membrane unit is measured, and the chemical dosage is set to be different according to whether the differential pressure is lower or higher than the reference value.

Patent Literature 2 describes that the respiratory activity of chemically-infused water-based slime and microorganisms is measured, and the chemical dosage is controlled according to the measured value.

Patent Literature 3 describes a method in which a chemical dosage (chemical dosage) is reduced by so-called intermittent addition in which a time over which a slime control agent is added (addition period) and a time over which a slime control agent is not added (non-addition period) are set.

### [Citation List]

### [Patent Literature]

[Patent Literature 1] Japanese Patent Laid-Open No. 2011-224543
[Patent Literature 2] Japanese Patent Laid-Open No. 2012-210612
[Patent Literature 3] PCT International Publication No. WO2013/005787

### [Summary of Invention]

### [Technical Problem]

An objective of the present invention is to provide a chemical dosing control method that is used to quickly determine an optimal amount of a slime control agent added to a water system and can achieve stable slime reduction according to the variation in slime load and the variation in the flow rate of water to be treated.

### [Solution to Problem]

The aspects of the present invention are as follows.

[1] A chemical dosing control method of controlling a chemical dosage of a slime control agent added to water to be treated supplied to a reverse osmosis membrane system, including controlling the chemical dosage based on a rate of change in an index value related to fouling of the reverse osmosis membrane system.
[2] The chemical dosing control method according to [1], wherein the chemical dosage is controlled so that the concentration of the slime control agent contained in the water to be treated supplied to the reverse osmosis membrane system changes.
[3] The chemical dosing control method according to [1], wherein addition of the slime control agent to the water to be treated is intermittent addition including an addition process and a pause process, and wherein the chemical dosage is controlled by changing a time of at least one of the intermittent process and the pause process.
[4] The chemical dosing control method according to any one of [1] to [3], wherein the rate of change in the index value has a positive correlation with a progress rate of fouling, and wherein, when an average rate of change in the index value in a set sampling period is equal to or less than a threshold value A, the chemical dosage is reduced by a specified amount.
[5] The chemical dosing control method according to [4], wherein an optimal chemical dosing level search mode is provided in which a plurality of chemical dosing levels with different chemical dosages are set, when control starts, chemical dosing starts at a predetermined chemical dosing level that is preset, and whenever the sampling period elapses, the average rate of change in the index value in the sampling period is compared with the threshold value A, when the average rate of change is equal to or less than the threshold value A, a process of reducing the chemical dosage to a level one or more steps lower is repeatedly performed, and when the average rate of change exceeds the threshold value A, the chemical dosing level is maintained without change, or the chemical dosage is increased to a level one or more steps higher, and the chemical dosing level is set as an optimal chemical dosing level.
[6] The chemical dosing control method according to [5], wherein a stable operation mode is provided in which an operation continues at the optimal chemical dosing level after the optimal chemical dosing level is determined in the optimal chemical dosing level search mode.
[7] The chemical dosing control method according to [6], wherein, in the stable operation mode, whenever the set sampling period elapses, the average rate of change in the sampling period is compared with the threshold value A, and when the average rate of change is equal to or less than the threshold value A, a process of continuing an operation with the same chemical dosing level is repeatedly performed, and in the operation with the same chemical dosing level, when comparison between the average rate of change and the threshold value A has been consecutively performed n times, the chemical dosage is reduced to a level one or more steps lower.
[8] The chemical dosing control method according to any one of [1] to [4], wherein a stable operation mode is provided in which a plurality of chemical dosing levels with different chemical dosages are set, chemical dosing is performed at a predetermined chemical dosing level, and whenever the sampling period elapses, the average rate of change in the sampling period is compared with the threshold value A, and when the average rate of change is equal to or less than the threshold value A, a process of continuing an operation with the same chemical dosing level is repeatedly performed, and in the operation with the same chemical dosing level, when comparison between the average rate of change and the threshold value A has been consecutively performed n times, the chemical dosage is reduced to a level one or more steps lower.
[9] The chemical dosing control method according to any one of [6] to [8], wherein, in the stable operation mode, whenever the sampling period elapses, the average rate of change is compared with the threshold value A, and when the average rate of change is larger than the threshold value A, the chemical dosage is increased to a level j steps higher (j is an integer of 1 or more).
[10] The chemical dosing control method according to [9], wherein, in the stable operation mode, for the threshold value, a threshold value B larger than the threshold value A is set, wherein, whenever the sampling period elapses, the average rate of change is compared with the threshold value B, and wherein, when the average rate of change is larger than the threshold value B, the chemical dosage is increased to a level m steps higher (m is an integer of 2 or more).
[11] The chemical dosing control method according to any one of [1] to [10], wherein the index value is a differential pressure or water supply pressure on a non-permeable side of the reverse osmosis membrane system.
[12] The chemical dosing control method according to any one of [1] to [3], wherein the average rate of change in the index value has a negative correlation with a progress rate of fouling, and when an average rate of change in the index value in the set sampling period is equal to or larger than a threshold value A, the chemical dosage is reduced by a specified amount.

### [Advantageous Effects of Invention]

According to the present invention, a chemical dosage is automatically adjusted to an optimal amount when addition of a slime control agent starts.

According to an aspect of the present invention, when a differential pressure increase is observed after the chemical dosage is stable, the chemical dosage is automatically switched to an appropriate value.

In addition, according to one aspect of the present invention, after the chemical dosage is stable, the amount of chemicals used can be reduced by lowering the chemical dosage by one or more steps.

### [Brief Description of Drawings]

Fig. 1 is a configuration diagram of an RO system.
Fig. 2 is an explanatory diagram of a display screen of a control unit.
Fig. 3 is a flowchart explaining one example of the present invention.
Fig. 4 is a flowchart explaining one example of the present invention.
Fig. 5 is a flowchart explaining one example of the present invention.

### [Description of Embodiments]

In the present invention method, regarding a chemical dosage of a slime control agent added to water to be treated supplied to a reverse osmosis membrane system, the chemical dosage is controlled based on a rate of change in the index value related to fouling of the reverse osmosis membrane system.

The rate of change in the index value (for example, differential pressure) may have a positive correlation with the progress rate of fouling or may have a negative correlation therewith.

Hereinafter, a case in which the index value has a positive correlation with the progress rate of fouling will be described. In one aspect in this case, when the average rate of change in the index value in the set sampling period is equal to or less than a threshold value A, the chemical dosage is reduced by a specified amount.

In one example of this aspect, an optimal chemical dosing level search mode being provided in which a plurality of chemical dosing levels with different chemical dosages are set, when control starts, chemical dosing starts at a predetermined chemical dosing level that is preset, and whenever the sampling period elapses, an average rate of change in the index value in the sampling period is compared with the threshold value A, when the average rate of change is equal to or less than the threshold value A, a process of reducing the chemical dosage to a level one or more steps lower being repeatedly performed, and when the average rate of change exceeds the threshold value A, the chemical dosing level is maintained without change, or the chemical dosage is increased to a level one or more steps higher, and the chemical dosing level is set as an optimal chemical dosing level.

In one example of the present invention, a stable operation mode in which an operation continues at the optimal chemical dosing level after the optimal chemical dosing level is determined in the optimal chemical dosing level search mode is performed.

In one example of the stable operation mode, whenever the set sampling period elapses, the average rate of change in the sampling period is compared with the threshold value A, and when the average rate of change is equal to or less than the threshold value A, a process of continuing an operation with the same chemical dosing level is repeatedly performed, and in the operation with the same chemical dosing level, when comparison between the average rate of change and the threshold value A has been consecutively performed n times, the chemical dosage is reduced to a level one or more steps lower.

In another example of the stable operation mode, whenever the sampling period elapses, the average rate of change is compared with the threshold value A, and when the average rate of change is larger than the threshold value A, the chemical dosage is increased to a level j steps higher (j is an integer of 1 or more). In addition, a threshold value B larger than the threshold value A is set, and whenever the sampling period elapses, the average rate of change is compared with the threshold value B, and when the average rate of change is larger than the threshold value B, the chemical dosage is increased to a level m steps higher (m is an integer of 2 or more).

Hereinafter, embodiments will be described in detail with reference to the drawings.

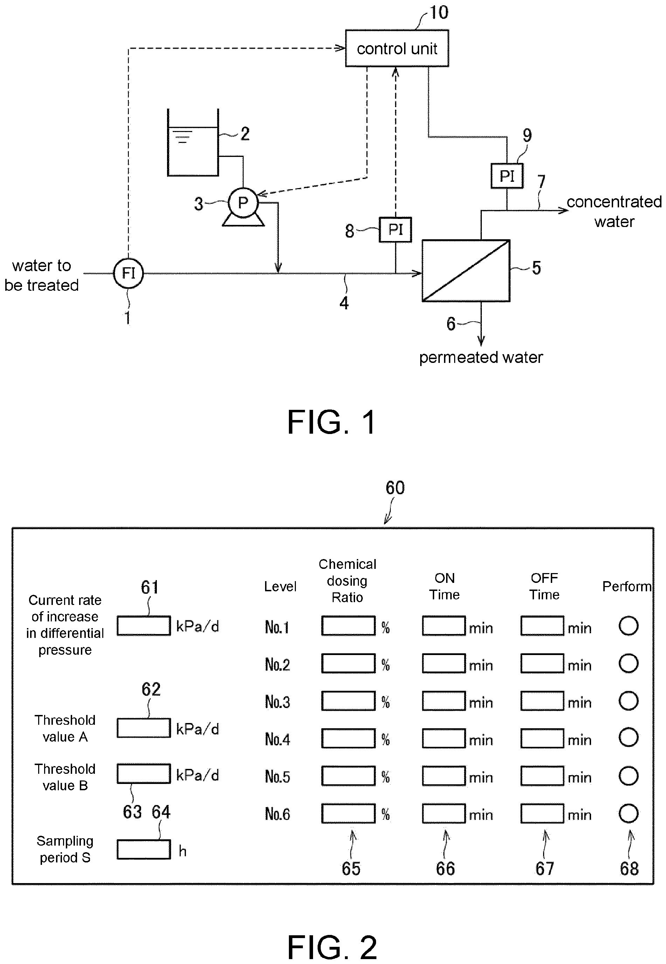

Fig. 1 is a configuration diagram of an RO system, in which water to be treated is supplied to an RO system 5 via a pipe 4, permeated water is removed from a pipe 6, and concentrated water is removed from a pipe 7.

A flowmeter 1 is provided on the pipe 4, and the measured value is input to a control unit 10. A slime control agent solution in a storage tank 2 is added to the pipe 4 via a chemical dosing pump 3. The chemical dosing pump 3 is controlled by the control unit 10. Pressure gauges 8 and 9 are provided on the pipes 4 and 7, respectively. The detected values of the pressure gauges 8 and 9 are input to the control unit 10, and a differential pressure ΔP on the non-permeable side of the RO system 5 is calculated from the difference between the values.

In the present invention, the chemical dosage (addition amount) of the step is controlled based on the average rate of increase in the differential pressure (value of increase in the differential pressure per unit time).

In one embodiment of the present invention, the number of the plurality of steps (levels) from the side with a smaller chemical dosage to a larger chemical dosage is not particularly limited, and is set as 2 to 100 steps, preferably 3 to 80 steps, particularly preferably 4 to 50 steps, and most preferably 5 to 10 steps, and when the rate of increase in the differential pressure is in a predetermined range or less, the chemical dosing level is gradually lowered. Then, when the rate of increase in the differential pressure in a predetermined range or less, chemical dosing continues at the lowest level. Here, the number of these set steps (levels) may be expressed as x.

Here, the average rate of increase in the differential pressure can be obtained by a least squares method of the slope in the differential pressure-time graph of the sampling period S.

The sampling period S is 0.5 to 720 h, particularly 24 to 336 h, and preferably particularly 72 to 168 h. The measurement interval of the differential pressure is 72 to 1,008 min, and particularly preferably about 216 to 504 min.

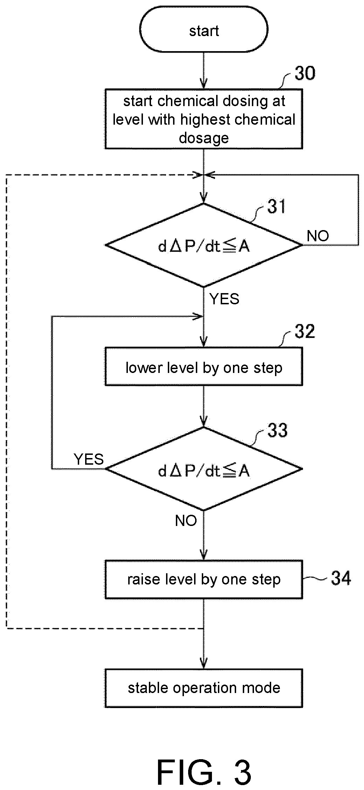

One example of chemical dosing control of the present invention is shown in Fig. 3.

First, chemical dosing starts at a level with the highest addition amount (Step 30). After the set sampling period S elapses, the average rate of increase in the differential pressure (dΔP/dt) in the period is calculated. When the average rate of increase in the differential pressure exceeds the threshold value A, chemical dosing continues at the highest chemical dosage (Step 31). When the average rate of increase is A or less, the chemical dosing level is changed to one step lower (Step 31→32). Then, similarly, whenever the set sampling period S elapses, it is determined whether the average rate of increase in the differential pressure exceeds the threshold value A (Step 33), and when it does not exceed A, the chemical dosing level is changed to one step lower (Step 33→32). When this operation is repeated, and the average rate of increase in the differential pressure exceeds the threshold value A, the chemical dosing level is raised by one step (Step 33→34). Here, when the average rate of increase in the differential pressure exceeds the threshold value A, the chemical dosing level may be maintained without change.

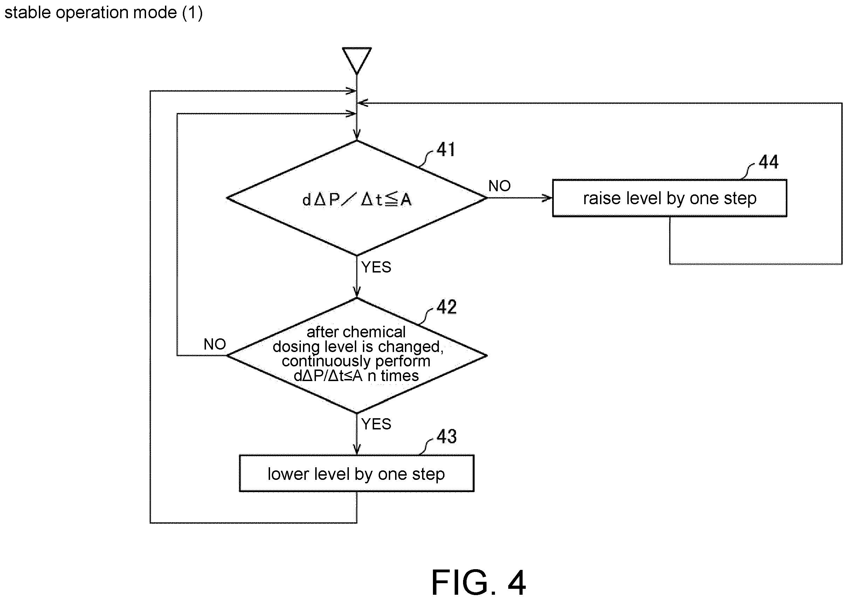

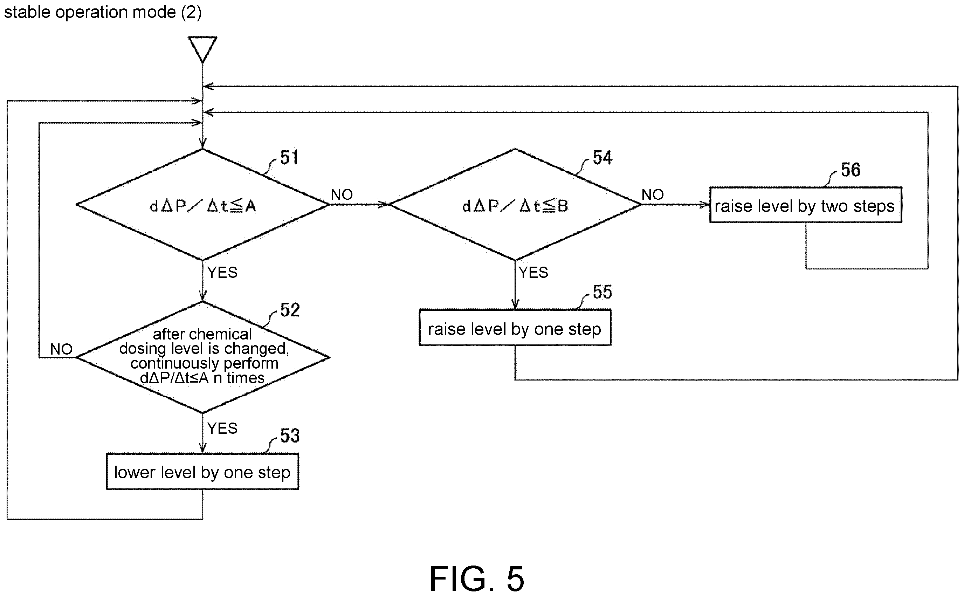

After that, as indicated by the dashed line in Fig. 3, the process returns to Step 31, and the same control is performed, or based on the chemical dosage set in Step 34, chemical dosing is performed in the stable operation mode shown in Fig. 4 or Fig. 5.

The chemical dosage set in Step 34 is the minimum chemical dosing level (optimal chemical dosing level) in which the average rate of increase in the differential pressure is equal to or less than the threshold value A among a plurality of set chemical dosing levels. Therefore, the step from start to Step 34 is one example of the optimal chemical dosing level search mode for searching for the optimal chemical dosing level.

In the optimal chemical dosing level search mode, although the level is changed by one step in Step 31 and Step 34, the level is not particularly limited thereto, and can be appropriately set within a range smaller than the set number of steps x. For example, when the preset number of steps is x, and the number of steps to be changed is y, y/x is 0.05 or more, particularly 0.3 or more and 0.5 or less, and particularly preferably 0.4 or less. When this is expressed in a formula, y/x can be set to be in the following range. Here, as described above, x is preferably 2 to 100, more preferably 3 to 80, still more preferably 4 to 50, and yet more preferably 5 to 10. (0.05 to 0.3)≤y/x≤(0.4 to 0.5)

A stable operation mode (1) in Fig. 4 will be described below.

At the chemical dosing level set in Step 34 above, after the set sampling period S elapses, the average rate of increase in the differential pressure is compared with the threshold value A (Step 41), and when the average rate of increase is equal to or less than the threshold value A, again, an operation continues at the same chemical dosing level, and after the sampling period S elapses again, the average rate of increase in the differential pressure is compared with the threshold value A (Step 41→42→41). This operation is repeatedly performed, and continuously performed at the same chemical dosing level n times, and when the average rate of increase in the differential pressure is equal to or less than the threshold value A, the chemical dosing level is reduced to one level lower (Step 41→42→43), and the operation continues at the chemical dosing level (Step 43→41). Here, the above n is a preset number of 2 or more (for example, 2 to 20, particularly 2 to 10).

During progress, when the average rate of increase in the differential pressure in the sampling period S exceeds the threshold value A, the chemical dosing level is raised to j steps (j is an integer of 1 or more), for example, one step higher (Step 41→44), and the operation continues at the chemical dosing level (Step 44→41).

Fig. 5 shows another example of the stable operation mode. After the set sampling period S elapses, the average rate of increase in the differential pressure is compared with the threshold value A (Step 51), and when the average rate of increase is A or less, as in the stable operation mode (1) in Fig. 4, again, an operation continues in the same chemical dosing level, and after the sampling period S elapses again, the average rate of increase in the differential pressure is compared with the threshold value A (Step 51→52→51). This operation is repeatedly performed, and continuously performed at the same chemical dosing level n times, and when the average rate of increase in the differential pressure is equal to or less than the threshold value A, the chemical dosing level is reduced to one level lower (Step 51→52→53), and the operation continues at the chemical dosing level (Step 53→51).

In a sable operation mode (2), a threshold value B larger than A is set. During progress, when the average rate of increase in the differential pressure in the sampling period S exceeds the threshold value A, next, the average rate of increase in the differential pressure is compared with the threshold value B, and when the average rate of increase is equal to or less than the threshold value B, the chemical dosing level is raised to one step higher (Step 54-55), and the operation continues at the chemical dosing level (Step 55→51). Then, in comparison between the average rate of increase in the differential pressure and the threshold value B, when the average rate of increase in the differential pressure exceeds the threshold value B, the chemical dosing level is raised to m steps (m is an integer of 2 or more), for example, two steps higher (Step 54→56), and the operation continues at the chemical dosing level (Step 56→51). m is selected from, for example, 2 to 20, particularly 2 to 10.

The ratio B/A of the threshold value B to A is 10 or less, and particularly preferably about 2 to 5. In addition, the above n is 20 or less and preferably particularly about 2 to 10. n does not have to be an integer.

During operation at the lowest level of the chemical dosage, in Step 32 in Fig. 3, Step 43 in Fig. 4 or Step 53 in Fig. 5 and the like, the chemical dosing level cannot be lowered. In such a case, without lowering the chemical dosing level, the process proceeds to the next step, Step 33 or the stable operation mode in Fig. 3, Step 41 in Fig. 4, and Step 51 in Fig. 5 while the chemical dosage remains at the lowest level.

During operation at the highest level of the chemical dosage, the chemical dosing level cannot be increased in Step 44 in Fig. 4, Steps 55 and 56 in Fig. 5 and the like. In that case, without increasing the chemical dosing level, the process proceeds to the next step, Step 41 in Fig. 4, and Step 51 in Fig. 5 while the chemical dosage remains at the highest level.

In the above stable operation mode, in Step 43, Step 44, Step 53 and Step 55, the level is changed by one step, but the level is not particularly limited thereto, and can be appropriately set within a range smaller than the set number of steps x. For example, when the preset number of steps is x, and the number of steps to be changed is z, z/x is 0.05 or more, particularly 0.3 or more and 0.5 or less, and particularly preferably 0.4 or less.

In addition, in the above aspect, following the optimal chemical dosing level search mode, the mode is shifted to the stable operation mode, but another process (mode) may be provided between the optimal chemical dosing level search mode and the stable operation mode, the optimal chemical dosing level search mode may be omitted, and the operation may be performed from the stable operation mode.

The above control is performed by the control unit 10. Fig. 2 shows one example of a display screen of the control unit 10 when the slime control agent is intermittently added. Here, although not shown, in order to input various values, input units such as a touch panel and a keyboard are provided in the control unit 10.

In a screen 60, a display unit 61 for displaying a differential pressure rate of increase at the present time, a display unit 62 for a threshold value A, a display unit 63 for a threshold value B, a display unit 64 for a sampling period S, and the like are provided. In this example, for the chemical dosing level, 6 steps of No. 1 to No. 6 are set, and a display unit 65 for a chemical dosing ratio at each level, a display unit 66 for an ON time when a chemical dosing pump is on and a display unit 67 for OFF time are provided. In addition, a lighting unit 68 for displaying a chemical dosing level that is performed by lighting up is provided.

Here, the chemical dosing ratio represents the chemical dosage at each level when the level with the highest discharge amount of the chemical dosing pump is set to 100%.

In addition, in the embodiment (intermittent addition), the chemical dosing pump 3 may be subjected to PWM control, the ON time may represent a pump ON time (duty), the OFF time may represent the pump OFF time, the chemical dosing ratios may all the same value (for example, 100%), and the pump ON time and/or the pump OFF time may be set to be different times, and thus different chemical dosing levels are set. However, the chemical dosing pump control is not limited to PWM control, and may be pulse control or analog control.

In the screen 60, a display unit that displays a time elapsed from when a timer for measuring one sampling time S starts may be provided.

In the above embodiment, although the rate of increase in the differential pressure ΔP on the non-permeable side of the RO system 5 is used as an index value, the rate of increase in the RO membrane water supply pressure (the value detected by the pressure gauge 8) may be used as an index value. The RO membrane water supply pressure also has a positive correlation with the progress rate of fouling.

As described above, the index value may have a negative correlation with the progress rate of fouling. For example, the rate of change (decrease rate) such as the permeation flux, the permeation flow rate, or the like of the RO system 5 may be used as an index value.

The permeation flux and the permeation flow rate differ not only due to membrane fouling but also due to the temperature and the intermembrane differential pressure. Therefore, when the permeation flux or the permeation flow rate is used, it is preferable to use the corrected permeation flux and the corrected permeation flow rate converted under the standard intermembrane differential pressure and standard temperature conditions.

When the index value has a negative correlation with the progress rate of fouling, "A or less" or the like when the index value has a positive correlation with the progress rate of fouling may be reversed to "A or more" or the like. For example, when the average rate of change in the index value (for example, the rate of change in the corrected permeation flux of the RO system 5) in the set sampling period is equal to or larger than the threshold value A, the chemical dosage is reduced by a specified amount.

In the above embodiment, the chemical dosage is controlled by changing at least one of the pump ON (addition process) time and the pump OFF (pause process) time, but the chemical dosage of the slime control agent injected into water to be treated may be controlled by changing the degree of opening of the opening and closing valve (not shown) provided on the pipe connecting the discharge side of the chemical dosing pump 3 and the pipe 4 or changing the discharge amount of the chemical dosing pump 3 itself.

In addition, in the above embodiment, addition of the slime control agent is intermittent addition including an addition process and a pause process, but may be continuous addition without a pause process. In the case of continuous addition, the chemical dosage can be controlled by changing the degree of opening of the above opening and closing valve or the discharge amount of the chemical dosing pump 3.

The slime control agent may be any of a composite chlorine-based slime control agent, a composite bromine-based slime control agent, and an isothiazolone compound. Examples of composite chlorine-based slime control agents include those containing a sulfamic acid compound.

In the present invention, a program for performing control in a control mode other than the above may be installed in the control unit 10. Examples of such a program include a program in which the concentration of the slime control agent in the system is set as a condition for adding the slime control agent, and the amount of injection of the slime control agent is controlled so that the concentration of the slime control agent is maintained according to the addition condition based on the measured value of the index having a correlation with the concentration of the slime control agent. When a composite chlorine-based slime control agent or a composite bromine-based slime control agent is used as the slime control agent, the index can be obtained according to measurement by a DPD method.

When the concentration of the slime control agent in the system is set, an index having a correlation with the concentration of the slime control agent or the concentration of the slime control agent in the system can be used instead of the chemical dosing ratio in Fig. 2.

While the present invention has been described in detail using specific embodiments, it will be apparent to those skilled in the art that various modifications can be made without departing from the spirit and scope of the present invention.

Priority is claimed on Japanese Patent Application No. 2019-012435, filed January 28, 2019, the content of which is incorporated herein by reference.

### [Reference Signs List]

- 3: Chemical dosing pump
- 5: RO system
- 8, 9: Pressure gauge
- 10: Control unit

## Claims

1. A chemical dosing control method of controlling a chemical dosage of a slime control agent added to water to be treated supplied to a reverse osmosis membrane system, comprising
controlling the chemical dosage based on a rate of change in an index value related to fouling of the reverse osmosis membrane system.

2. The chemical dosing control method according to claim 1,
wherein the chemical dosage is controlled so that the concentration of the slime control agent contained in the water to be treated supplied to the reverse osmosis membrane system changes.

3. The chemical dosing control method according to claim 1,
wherein addition of the slime control agent to the water to be treated is intermittent addition including an addition process and a pause process, and
wherein the chemical dosage is controlled by changing a time of at least one of the intermittent process and the pause process.

4. The chemical dosing control method according to any one of claims 1 to 3,
wherein the rate of change in the index value has a positive correlation with a progress rate of fouling, and
wherein, when an average rate of change in the index value in a set sampling period is equal to or less than a threshold value A, the chemical dosage is reduced by a specified amount.

5. The chemical dosing control method according to claim 4,
wherein an optimal chemical dosing level search mode is provided in which
a plurality of chemical dosing levels with different chemical dosages are set, when control starts, chemical dosing starts at a predetermined chemical dosing level that is preset, and whenever the sampling period elapses, the average rate of change in the index value in the sampling period is compared with the threshold value A,
when the average rate of change is equal to or less than the threshold value A, a process of reducing the chemical dosage to a level one or more steps lower is repeatedly performed, and
when the average rate of change exceeds the threshold value A, the chemical dosing level is maintained without change, or the chemical dosage is increased to a level one or more steps higher, and the chemical dosing level is set as an optimal chemical dosing level.

6. The chemical dosing control method according to claim 5,
wherein a stable operation mode is provided in which an operation continues at the optimal chemical dosing level after the optimal chemical dosing level is determined in the optimal chemical dosing level search mode.

7. The chemical dosing control method according to claim 6,
wherein, in the stable operation mode,
whenever the set sampling period elapses, the average rate of change in the sampling period is compared with the threshold value A, and when the average rate of change is equal to or less than the threshold value A, a process of continuing an operation with the same chemical dosing level is repeatedly performed, and in the operation with the same chemical dosing level, when comparison between the average rate of change and the threshold value A has been consecutively performed n times, the chemical dosage is reduced to a level one or more steps lower.

8. The chemical dosing control method according to any one of claims 1 to 4,
wherein a stable operation mode is provided in which a plurality of chemical dosing levels with different chemical dosages are set, chemical dosing is performed at a predetermined chemical dosing level, and whenever the sampling period elapses, the average rate of change in the sampling period is compared with the threshold value A, and when the average rate of change is equal to or less than the threshold value A, a process of continuing an operation with the same chemical dosing level is repeatedly performed, and in the operation with the same chemical dosing level, when comparison between the average rate of change and the threshold value A has been consecutively performed n times, the chemical dosage is reduced to a level one or more steps lower.

9. The chemical dosing control method according to any one of claims 6 to 8,
wherein, in the stable operation mode, whenever the sampling period elapses, the average rate of change is compared with the threshold value A, and when the average rate of change is larger than the threshold value A, the chemical dosage is increased to a level j steps higher (j is an integer of 1 or more).

10. The chemical dosing control method according to claim 9,
wherein, in the stable operation mode, for the threshold value, a threshold value B larger than the threshold value A is set,
wherein, whenever the sampling period elapses, the average rate of change is compared with the threshold value B, and
wherein, when the average rate of change is larger than the threshold value B, the chemical dosage is increased to a level m steps higher (m is an integer of 2 or more).

11. The chemical dosing control method according to any one of claims 1 to 10,
wherein the index value is a differential pressure or water supply pressure on a non-permeable side of the reverse osmosis membrane system.

12. The chemical dosing control method according to any one of claims 1 to 3,
wherein the average rate of change in the index value has a negative correlation with a progress rate of fouling, and when an average rate of change in the index value in the set sampling period is equal to or larger than a threshold value A, the chemical dosage is reduced by a specified amount.
